# FASCICULE DE BREVET EUROPEEN

(11) **EP 0 642 949 B1**
(45) Date de publication et mention de la délivrance du brevet: **25.03.1998**
(21) Numéro de dépôt: 94401171.7
(22) Date de dépôt: 26.05.1994
(51) Int. Cl.: B60N 2/28, B60N 2/30

(54) **Dispositif de fixation d'un siège d'enfant dans une voiture**
Befestigungsvorrichtung für einen Kinderautositz
Device for fastening a child car seat

(30) Priorité: 08.09.1993 FR 9310677
(43) Date de publication de la demande: 15.03.1995
(73) Titulaire: CESA COMPAGNIE EUROPEENNE DE SIEGES POUR AUTOMOBILES, 92307 Levallois-Perret Cédex (FR)
(72) Inventeur: Le Bihan, Philippe, F-45250 Briare (FR); Monteiro, Jean-Pierre, F-45500 Gien (FR); Baret, Frédéric Louis René, F-45200 Montargis (FR)
(74) Mandataire: Polus, Camille

(56) Documents cités:
- EP-A- 0 462 859
- CH-A- 385 641
- FR-A- 2 615 799
- FR-A- 2 665 399
- GB-A- 1 416 441
- GB-A- 2 137 084

## Description

La présente invention est relative à un dispositif pour la fixation par exemple d'un siège d'enfant à une partie de siège d'un véhicule automobile notamment terrestre, qui autorise le réglage de ce siège d'enfant par rapport à la partie qui le reçoit selon l'une ou l'autre de deux positions d'inclinaison différente.

Comme on le sait, pour des raisons de sécurité des organismes professionnels et/ou les Pouvoirs Publics ont édictés des normes ou des réglementations imposant le transport des jeunes enfants dans des sièges particuliers qui doivent s'adapter aux sièges classiques des véhicules automobiles terrestres. Les sièges d'enfants se présentent le plus souvent à la manière d'une coque ou analogue capitonnée qui est pourvue d'une ceinture de sécurité qui lui est particulière, et qu'il faut fixer sur les sièges d'un véhicule.

Certaines des solutions proposées pour la fixation d'une telle coque sur le siège d'un véhicule automobile utilisent la ceinture de sécurité dont est normalement équipé le siège qui recevra la coque. D'autres solutions font appel à une partie spécialement adaptée du siège du véhicule.

Une solution de fixation qui appartient à la dernière catégorie mentionnée est, par exemple, exposée dans le document FR-A-2 615 799. Selon cette solution, une partie médiane mobile de l'assise d'un siège ou d'une banquette peut recevoir outre des tablettes escamotables, un crochet particulier pour suspendre une coque de siège pour enfant.

Si cette solution est convenable, elle n'est toutefois pas pleinement satisfaisante notamment pour des raisons de confort et aussi de sécurité. En effet, on observera qu'avec la solution proposée par ce document, la coque pour siège d'enfant est simplement suspendue à un crochet et que cette coque, une fois suspendue demeure dans une orientation fixe relativement à la partie qui la reçoit sans qu'il soit possible de modifier son inclinaison par exemple entre une position relativement dressée ou route et une position relativement basculée par rapport à celle-ci ou position détente.

GB-A-2 137 084 et GB-A-1 416 441 décrivent chacun un dispositif de fixation d'un siège d'enfant à une partie de siège de véhicule automobile permettant le réglage de deux positions inclinées du siège d'enfant.

En particulier, GB-A-1 416 441 décrit un dispositif de fixation d'une coque, notamment de siège d'enfant, à une partie de siège de véhicule automobile selon l'une ou l'autre de deux positions d'inclinaison différente, dispositif du type comprenant un organe mâle destiné à être associé à la coque ou partie de siège, un organe femelle pour recevoir par un déplacement selon une direction donnée cet organe mâle et qui est destiné à être associé à la partie de siège ou coque, un verrou avec une gâche et un pêne destinés à mettre en prise et condamner des moyens d'accrochage coopérant reliés aux organes mâle et femelle, et une commande du verrou permettant de mettre en prise ou séparer les moyens d'accrochage pour engager l'organe mâle dans l'organe femelle ou l'en dégager respectivement.

Le but de l'invention est de réaliser un dispositif perfectionné de fixation d'un siège d'enfant à une partie de siège de véhicule automobile qui permette le réglage de la position de la coque avec au moins deux inclinaisons que l'on peut choisir à volonté et qui assure la condamnation du siège suspendu dans la position adoptée.

A cet effet, l'invention a pour objet un dispositif de fixation du type précité, caractérisé en ce que l'organe mâle est constitué d'une semelle, d'une hampe et d'un embout d'axe longiligne avec deux côtés opposés, en ce que l'organe femelle est constitué d'un corps avec une embouchure et avec un logement d'axe longiligne délimité par deux parois opposées destinées à venir en regard chacune d'un des côtés opposés lorsque l'organe mâle est engagé dans l'organe femelle, en ce que les moyens d'accrochage sont portés par ces côtés et parois, en ce que la gâche du verrou est associée à l'embout et le pêne du verrou est associé au corps, ce pêne étant mobile transversalement par rapport à la direction donnée à partir d'une position médiane normale vers l'une ou l'autre de deux positions latérales pour venir s'insérer entre un côté et une paroi en regard et reposer simultanément contre ces côté et paroi en regard afin de contribuer à la mise en prise des moyens d'accrochage et de les condamner, et en ce que la commande est reliée au pêne pour le déplacer longitudinalement selon cette direction donnée à partir de cette position médiane normale de manière à l'introduire entre ces côté et paroi ou à l'en extraire.

D'autres caractéristiques de l'invention apparaîtront à la lecture de la description et des revendications qui suivent ainsi que de l'examen du dessin annexé, donné seulement à titre d'exemple, où :
- la Figure 1 est une vue en perspective schématique d'un siège d'enfant avec une coque ou similaire fixée sur une partie d'un siège d'un véhicule automobile terrestre grâce à un dispositif selon l'invention;
- la Figure 2 est une vue en coupe partielle schématique par un plan vertical illustrant le montage d'une coque ou similaire sur une partie de siège par un dispositif selon l'invention;
- les Figures 3A et 3B sont des vues de détail schématique en coupe selon un plan vertical médian, illustrant le dispositif selon l'invention dans l'une ou l'autre de ses positions d'inclinaison différente;
- la Figure 4 est une coupe transversale schématique d'un mode de réalisation d'un dispositif selon l'invention; et
- la Figure 5 est une vue analogue à celle de la Figure 4 d'une autre variante de réalisation.

Les sièges d'enfant et leur coques ou similaires destinés à être adaptés à un siège de véhicule automobile notamment terrestre, ainsi que les sièges de véhicules automobiles terrestres étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un dispositif selon l'invention avant d'en exposer au besoin la fabrication, et le montage et le fonctionnement.

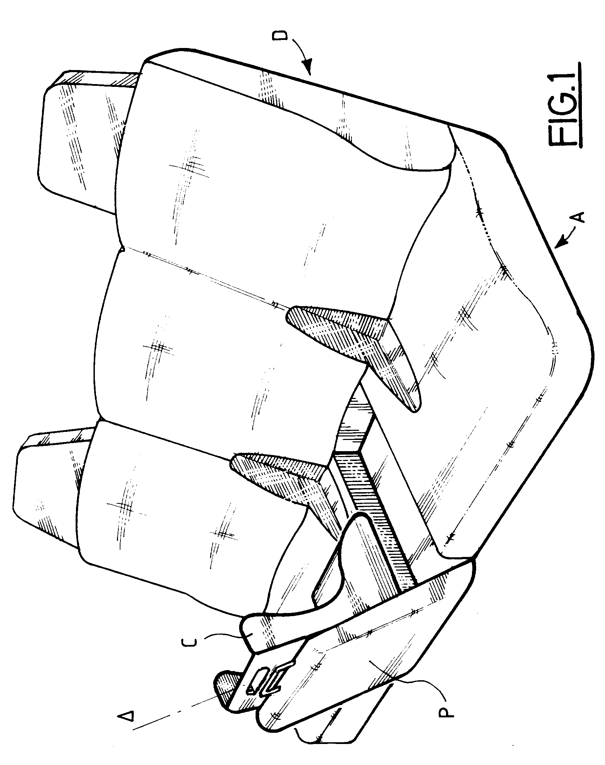

Comme on le voit sur la Figure 1 du dessin, une coque C ossature ou similaire de siège d'enfant de tout type courant classique, est destinée à être montée sur une partie P d'un siège ou banquette de véhicule automobile terrestre qui comprend une assise A et un dossier D. Dans le cas particulier illustré, il s'agit d'un siège arrière par exemple du type "1/3-2/3" dont l'une et/ou l'autre des fractions peut se rabattre et/ou se basculer voire s'extraire en totalité du véhicule. Ce type de siège est classique et on ne s'y étendra pas plus amplement.

Le dispositif selon l'invention est destiné à permettre la fixation de la coque C sur la partie P d'une manière telle que l'on puisse choisir l'inclinaison donnée à la coque relativement à la partie qui la porte lors de la présentation de la coque pour sa fixation. Une fois le choix de l'inclinaison fait, ce dispositif est aussi destiné à permettre la condamnation de la coque sur la partie en question avec l'inclinaison adoptée, le verrouillage assuré. Ceci ressortira nettement de ce qui suit.

Le dispositif pour la fixation de la coque C de siège d'enfant sur la partie P de siège de véhicule d'automobile notamment terrestre comprend, essentiellement, un organe 10 mâle, un organe 20 femelle, des moyens d'accrochage 30, un verrou de condamnation 40 et une commande 50.

L'organe femelle est destiné à recevoir l'organe mâle par un déplacement selon une direction Δ donnée. Les organes mâle et femelle peuvent être indifféremment fixés l'un à la coque et l'autre à la partie de siège de véhicule, ou inversement.

L'organe mâle 10 d'axe longitudinal 100 comprend, essentiellement, une semelle 11 pour sa fixation, une hampe 12 et un embout 13 longiligne. L'embout longiligne 13 comprend deux côtés 130 opposés avec des appuis 131 latéraux et une tête 132 arrondie. L'embout 13 est pratiquement symétrique par rapport à l'axe 100.

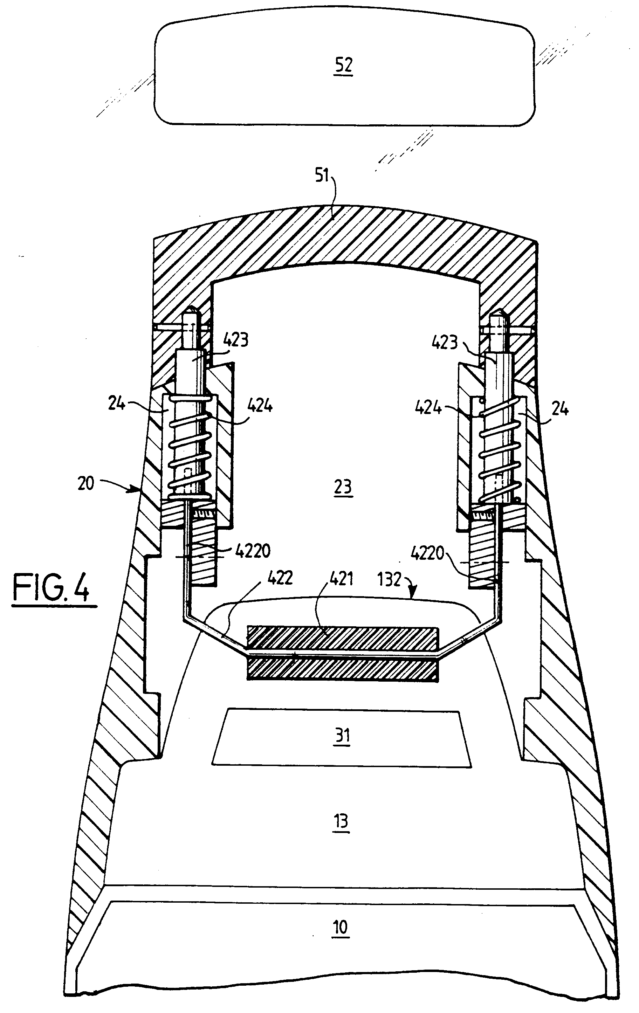

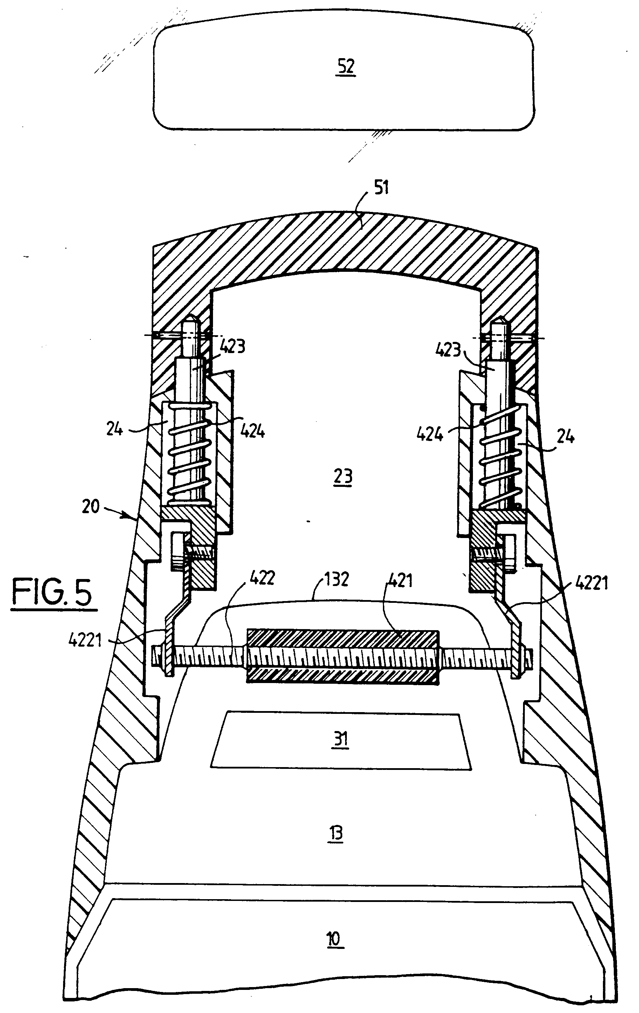

L'organe femelle 20 d'axe longitudinal 200 comprend, essentiellement, un corps 21, une embouchure 22 et un logement 23 longiligne délimité notamment par deux parois 230 opposées avec des contre-appuis 231. Cet organe femelle 20 comprend aussi deux chambres 24 latérales, disposées de part et d'autre du logement 23, comme cela apparaît sur les Figures 4 et 5, pour les raisons qui seront exposées par la suite. Le logement 23 est pratiquement symétrique par rapport à l'axe 200.

Les moyens d'accrochage 30 comprennent, essentiellement, au moins un ardillon 31 et un bec 32 complémentaire destinés à venir en prise l'un avec l'autre. Un ardillon 31 est par exemple saillant sur chacun des côtés 130 de l'embout longiligne 13. Comme on le voit clairement sur les figures du dessin chaque ardillon 31 comprend une rampe 311 inclinée relativement à l'axe 100 et divergente vers la hampe 12, et une butée 312 pratiquement perpendiculaire à l'axe 100. Un bec 32 est par exemple saillant sur chacune des parois opposées 230 du logement 23. Comme on le voit clairement sur les figures du dessin, chaque bec 32 comprend un flan 321 incliné relativement à l'axe 200 et divergent vers l'embouchure 22, et un socle 322 pratiquement perpendiculaire l'axe 200.

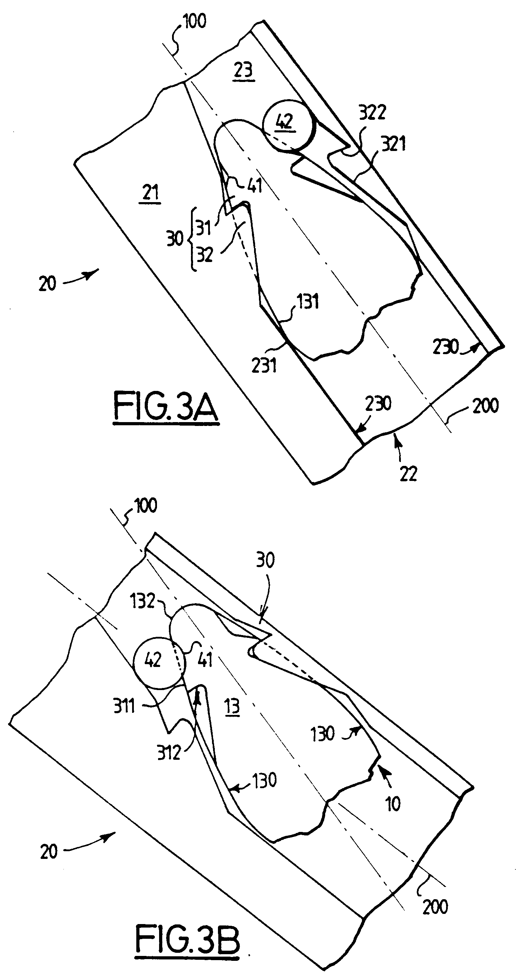

Le verrou de condamnation 40 comprend une gâche 41 et un pêne 42. La gâche 41 se présente à la manière d'une dépression ou cuvette ménagée sur chacun des côtés opposés 130 de l'embout longiligne 13, comme cela est clairement illustré sur les figures du dessin. Le pêne 42 est associé au corps 21 et est mobile selon et par rapport à la direction donnée Δ ou à l'axe 200 notamment. De la sorte lorsque le pêne 42 se déplace selon cette direction il peut soit quitter une position médiane normale en permettant d'engager l'organe mâle dans l'organe femelle avec l'une des deux inclinaisons possibles ou en permettant la décondamnation du verrou et leur dégagement, soit revenir à cette position en l'absence d'organe mâle dans l'organe femelle. De la sorte, il peut se déplacer à partir d'une position médiane normale vers l'une ou l'autre de deux positions latérales comme clairement illustré sur les Figures 3A et 3B. Ainsi le pêne peut venir s'insérer entre un côté 130 et une paroi 230 en regard au cours de l'engagement de l'organe mâle dans l'organe femelle et venir reposer simultanément contre ces côté et paroi en regard afin de mettre en prise un ardillon et un bec des moyens d'accrochage qu'il condamne dans leur position verrouillée.

Comme on le voit sur les Figures 4 et 5, le pêne 42 se présente à la manière d'un galet 421 cylindrique porté par une tige 422. Selon le mode de réalisation illustré sur la Figure 4, la tige 422 est flexible et élastique, faite par exemple en corde à piano, et se prolonge par des branches 4220 élastiques. Selon le mode de réalisation illustré sur la Figure 5, la tige 422 est rigide et montée sur des biellettes 4221 articulées rappelées élastiquement vers la position médiane normale. Ces branches 4220 ou biellettes 4221 sont fixées à des colonnes 423 logées dans les chambres 24. Un ressort 424 agit sur chaque colonne de manière à solliciter le pêne 42 selon l'axe 200 vers le bas en examinant les diverses figures du dessin, c'est-à-dire vers la position médiane normale.

De ce qui précède on comprend que le pêne est mobile longitudinalement selon la direction Δ ou l'axe 200 à partir de sa position médiane normale vers laquelle il est rappelé par les ressorts 424. On comprend aussi que le pêne est mobile transversalement relativement à la direction Δ ou l'axe 200 à partir de sa position médiane normale vers laquelle il est rappelé par les branches 4220 ou biellettes 4221.

Les tailles respectives de l'organe mâle et de l'organe femelle autorisent un certain basculement relatif de manière que engagement l'un dans l'autre fait, on puisse donner aux axes 100 et 200 des inclinaisons relatives selon deux valeurs d'angle différentes, l'un des angles étant par exemple nul.

La commande 50 comprend une poignée 51 mobile et s'il y a lieu un alvéole 52 de préhension comme illustré. La poignée 51 est fixée à l'extrémité des colonnes 423 comme cela est illustré en particulier sur les Figures 4 et 5.

Tous les constituants d'un dispositif selon l'invention sont faits en des matériaux traditionnels, métalliques ou synthétiques par exemple, travaillés et mis en forme selon des techniques classiques habituelles. Tous les constituants d'un dispositif selon l'invention sont réunis, assemblés et montés comme cela ressort particulièrement bien des figures du dessin.

Le fonctionnement d'un dispositif selon l'invention est le suivant.

Pour mettre la coque C sur la partie P grâce au dispositif de fixation selon l'invention, on saisit par exemple la coque en tenant simultanément d'une main la poignée et l'alvéole de la commande. En faisant ceci on peut soulever la coque et on comprime les ressorts et on relève le pêne approximativement selon la direction Δ ou l'axe 200 pour l'écarter de sa position médiane normale. Simultanément à ceci on engage l'organe femelle sur l'organe mâle en donnant à la coque l'une ou l'autre de ses deux inclinaisons possibles selon le choix fait, et on engage à fond l'organe femelle sur l'organe mâle. La profondeur de l'engagement est fixée par des butées appropriées convenablement disposées. On peut alors relâcher la poignée et l'alvéole. Les ressorts rappellent le pêne.

Si l'on a choisi de donner la position route à la coque, comme illustrée sur la Figure 3A, on engage l'organe femelle sur l'organe mâle selon la direction Δ en faisant en sorte que les axes 100 et 200 soient pratiquement parallèles voire confondus. On voit alors que le galet du pêne a pris place entre un côté et une paroi en regard et repose simultanément contre ce côté et cette paroi en se logeant dans la cuvette ou dépression de la gâche. On voit que le bec et l'ardillon des moyens d'accrochage sont en prise et condamnés dans cette position et que les appui et contre-appui sont au contact.

Pour séparer la coque de la partie il suffit de tirer sur la poignée à l'encontre des ressorts pour dégager le pêne de la gâche et pour faire basculer un peu la coque afin de séparer alors l'ardillon et le bec précédemment en prise. Les moyens d'accrochage n'étant plus en contact, il suffit de tirer la coque pour la déplacer dans la direction Δ afin de séparer les parties mâle et femelle.

Le dessin de la Figure 3B illustre le dispositif dans la position qu'il occupe lorsque la coque est placée dans son autre position dite de détente.

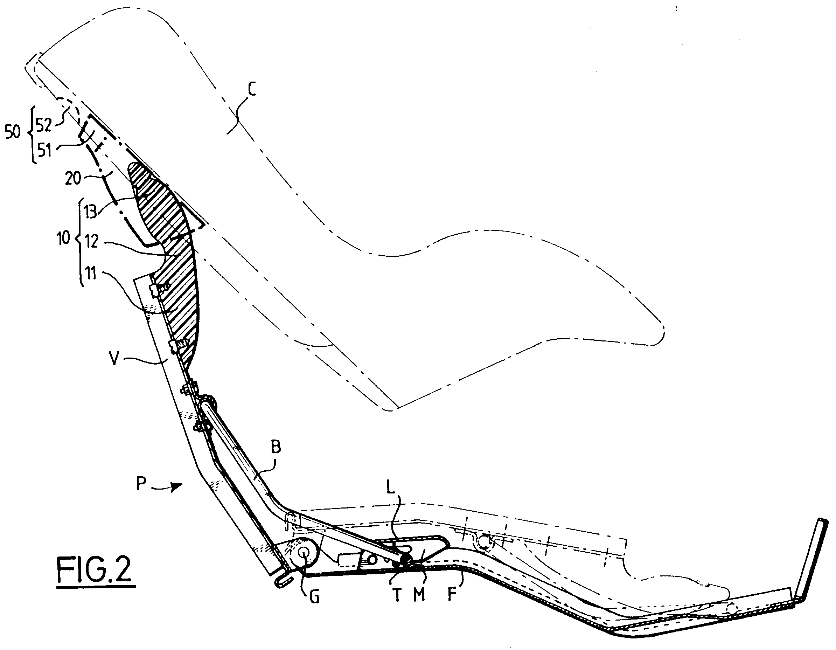

Le dispositif pour la fixation notamment d'une coque de siège d'enfant à une partie de siège de véhicule automobile terrestre trouve une application toute particulière lorsque cette partie est une partie mobile de l'assise d'un siège ou d'une banquette arrière, du type de celui illustré sur la Figure 2 d'une manière schématique.

En se reportant à cette figure on voit que la partie P illustrée ici sans les revêtements et habillages classiques utilisés pour les coussins d'assise notamment, comprend un volet V monté à l'aide d'une articulation G tels des gonds, des charnières ou similaire sur la structure du véhicule tel le fond F du siège. Le volet V porte des bras B latéraux mobiles réunis par une traverse T transversale. Un loquet L de retenue muni d'un crochet opère à la manière d'un mécanisme à échappement M pour immobiliser la traverse T. Initialement la partie mobile est rabattue de manière à être pratiquement au niveau de l'assise, comme illustrée en trait fin discontinu. Pour relever la partie mobile et la mettre dans une position apte à recevoir une coque de siège d'enfant, on la saisit et on la redresse dans la position où elle est illustrée en trait fort continu sur la Figure 2. En basculant autour de l'articulation G, le volet V entraîne les bras B avec leur traverse T qui vient s'accrocher automatiquement par exemple, sous le loquet L de manière à retenir le volet en position redressée. Pour rabattre le volet, il suffit de saisir le loquet pour dégager son crochet de la traverse et de rabattre ensuite le volet pour de nouveau rendre la partie mobile affleurante avec le coussin de l'assise qui l'encadre de part et d'autre.

Le dispositif de fixation selon l'invention a été décrit à propos de son application particulière à un siège d'enfant devant être porté par un siège de véhicule automobile terrestre. Il est clair qu'il s'agit là d'une application spécifique et que le dispositif de fixation selon l'invention n'est pas nécessairement limité à une telle application.

Ce qui précède met bien en lumière l'intérêt du dispositif selon l'invention et les avantages qu'il apporte notamment pour la fixation d'un siège pour enfant sur un siège de véhicule automobile.

## Revendications

1. Dispositif de fixation d'une coque (C), notamment de siège d'enfant, à une partie (P) de siège de véhicule automobile selon l'une ou l'autre de deux positions d'inclinaison différente, dispositif du type comprenant un organe mâle (10) destiné à être associé à la coque (C) ou partie (P) de siège, un organe femelle (20) pour recevoir par un déplacement selon une direction (Δ) donnée cet organe mâle (10) et qui est destiné à être associé à la partie (P) de siège ou coque (C), un verrou (40) avec une gâche (41) et un pêne (42) destinés à mettre en prise et condamner des moyens d'accrochage (30) coopérant reliés aux organes mâle (10) et femelle (20), et une commande (50) du verrou permettant de mettre en prise ou séparer les moyens d'accrochage (30) pour engager l'organe mâle (10) dans l'organe femelle (20) ou l'en dégager respectivement, caractérisé en ce que
l'organe (10) mâle est constitué d'une semelle (11), d'une hampe (12) et d'un embout (13) d'axe (100) longiligne avec deux côtés (130) opposés,
en ce que l'organe (20) femelle est constitué d'un corps (21) avec une embouchure (22) et avec un logement (23) d'axe (200) longiligne délimité par deux parois (230) opposées destinées à venir en regard chacune d'un des côtés opposés (130) lorsque l'organe mâle (10) est engagé dans l'organe femelle (20),
en ce que les moyens d'accrochage (30) sont portés par ces côtés (130) et parois (230),
en ce que la gâche (41) du verrou est associée à l'embout (13) et le pêne (42) du verrou est associé au corps (21), ce pêne (42) étant mobile transversalement par rapport à la direction donnée (Δ) à partir d'une position médiane normale vers l'une ou l'autre de deux positions latérales pour venir s'insérer entre un côté (130) et une paroi (230) en regard et reposer simultanément contre ces côté (130) et paroi (230) en regard afin de contribuer à la mise en prise des moyens d'accrochage (30) et de les condamner,
et en ce que la commande (50) est reliée au pêne (42) pour le déplacer longitudinalement selon cette direction donnée (Δ) à partir de cette position médiane normale de manière à l'introduire entre ces côté (130) et paroi (230) ou à l'en extraire.

2. Dispositif selon la revendication 1, caractérisé en ce que les moyens d'accrochage (30) comprennent saillant sur chacun de ces côtés (130) un ardillon (31) avec une rampe (311) inclinée relativement à l'axe (100) et divergente vers la hampe (12) et avec une butée (312) pratiquement perpendiculaire à cet axe (100), et saillant sur chacune de ces parois (230) un bec (32) avec un flanc (321) incliné relativement à l'axe (200) et divergent vers l'embouchure (22) et avec un socle (322) pratiquement perpendiculaire à cet axe (200).

3. Dispositif selon la revendication 1 ou 2, caractérisé en ce que la gâche (41) est formée de deux dépressions qui sont chacune ménagées sur l'un des deux côtés opposés (130) de l'embout longiligne (13) et en ce que le pêne (42) est un galet (421) cylindrique portée par une tige (422) reliée à la commande (50).

4. Dispositif selon l'une quelconque des revendications 1 à 3, caractérisé en ce que la commande (50) comprend une poignée (51) montée mobile sur le corps (21).

5. Dispositif selon la revendication 4, caractérisé en ce que la poignée (51) porte des colonnes (423) de guidage soumises à l'action de ressorts (424) de rappel et auxquelles est reliée la tige (422) portant le galet (421) et en ce que le galet (421) est sollicité élastiquement.

6. Application du dispositif conforme à l'une quelconque des revendications 1 à 5, à un véhicule automobile terrestre dont la partie (P) de siège est une partie mobile d'une assise (A).

## Claims

1. Device for fixing a shell (C), especially of a child's seat, to a seat part (P) of a motor vehicle in one or other of two differently inclined positions, which device is of the type comprising a male means (10) intended to be associated with the shell (C) or seat part (P), a female means (20) to receive the male means (10) by displacement in a given direction (Δ) and which is intended to be associated with the seat part (P) or shell (C), a lock (40) with a catch (41) and a striker (42) which are intended to engage and lock co-operating fastening means (30) connected to the male means (10) and female means (20), and a control means (50) for the lock allowing the fastening means (30) to be engaged or separated in order, respectively, to engage the male means (10) in the female means (20) or to disengage it therefrom, characterized in that
the male means (10) is constituted by a sole plate (11), a shank (12) and an end-piece (13) with elongate axis (100) having two opposed sides (130),
in that the female means (20) is constituted by a body (21) with an opening (22) and having a seating (23) with elongate axis (200) bounded by two opposed walls (230) which are each intended to assume a position facing one of the opposed sides (130) when the male means (10) is engaged in the female means (20),
in that the fastening means (30) are borne by these sides (130) and walls (230),
in that the catch (41) of the lock is associated with the end-piece (13) and the striker (42) of the lock is associated with the body (21), the striker (42) being movable transversely with respect to the given direction (Δ) from a normal median position towards one or other of two lateral positions in order to be inserted between one side (130) and a facing wall (230) and to rest simultaneously against the side (130) and facing wall (230) in order to contribute to the engagement of the fastening means (30) and to lock them,
and in that the control means (50) is connected to the striker (42) in order to displace it longitudinally in the given direction (Δ) starting from the normal median position so as to introduce it between the side (130) and wall (230) or to withdraw it therefrom.

2. Device according to Claim 1, characterized in that the fastening means (30) comprise, projecting on each of the sides (130), a tongue (31) with a ramp (311) inclined relative to the axis (100) and diverging towards the shank (12) and with a stop (312) substantially perpendicular to the axis (100), and, projecting on each of the walls (230), a lug (32) with a flank (321) inclined relative to the axis (200) and diverging towards the opening (22) and with a base (322) substantially perpendicular to the axis (200).

3. Device according to Claim 1 or 2, characterized in that the catch (41) is formed of two depressions which are each provided on one of the two opposed sides (130) of the elongate end-piece (13) and in that the striker (42) is a cylindrical roller (421) borne by a rod (422) connected to the control means (50).

4. Device according to any one of Claims 1 to 3, characterized in that the control means (50) comprises a handle (51) mounted so as to be movable on the body (21).

5. Device according to Claim 4, characterized in that the handle (51) carries guide columns (423) which are subject to the action of return springs (424) and to which is connected the rod (422) bearing the roller (421), and in that the roller (421) is stressed resiliently.

6. Application of the device according to any one of Claims 1 to 5, to a land motor vehicle, the seat part (P) of which is a movable part of a seat base (A).

## Patentansprüche

1. Vorrichtung zur Befestigung einer Schale (C), insbesondere eines Kindersitzes, an einem Teil (P) eines Kraftfahrzeugsitzes in der einen oder der anderen zweier unterschiedlicher Neigungsstellungen, wobei die Vorrichtung von dem Typ ist, der ein Steckelement (10), das dazu bestimmt ist, mit der Schale (C) oder dem Teil (P) des Sitzes verbunden zu werden, ein Buchsenelement (20), das dieses Steckelement (10) durch eine Verschiebung längs einer gegebenen Richtung (Δ) aufnimmt und dazu bestimmt ist, mit dem Teil (P) des Sitzes oder der Schale (C) verbunden zu werden, einen Verschluß (40) mit einem Schließhaken (41) und einem Riegel (42), die dazu bestimmt sind, mit ihnen zusammenwirkende Eingriffmittel (30), die dem Steckelement (10) und dem Buchsenelement (20) zugeordnet sind, einzurücken und auszurücken, sowie einen Verschlußbedienungshebel (50) enthält, der das Einrücken oder Ausrücken der Eingriffmittel (30) ermöglicht, um das Steckelement (10) mit dem Buchsenelement (20) in Eingriff zu bringen bzw. diesen Eingriff zu lösen, dadurch gekennzeichnet, daß
das Steckelement (10) aus einer Fußplatte (11), einem Schaft (12) und einem länglichen Ansatz (13) mit Achse (100) und zwei gegenüberliegenden Seiten (130) gebildet ist,
das Buchsenelement (20) aus einem Körper (21) mit einer Öffnung (22) und mit einem länglichen Aufnahmeraum (23) mit Achse (200) gebildet ist, der durch zwei gegenüberliegende Wände (230) begrenzt ist, die dazu bestimmt sind, gegenüber jeweils einer der gegenüberliegenden Seiten (130) angeordnet zu werden, wenn das Steckelement (10) in dem Buchsenelement (20) in Eingriff ist,
die Eingriffmittel (30) von diesen Seiten (130) und Wänden (230) getragen werden,
der Schließhaken (41) des Verschlusses mit dem Ansatz (13) verbunden ist und der Riegel (42) des Verschlusses mit dem Körper (21) verbunden ist, wobei dieser Riegel (42) in bezug auf die gegebene Richtung (Δ) ausgehend von einer normalen Mittelposition in die eine oder die andere zweier seitlicher Positionen transversal beweglich ist, um zwischen eine Seite (130) und eine gegenüberliegende Wand (230) eingeschoben zu werden und um gleichzeitig an dieser Seite (130) und dieser gegenüber befindlichen Wand (230) anzuliegen, um zum Einrücken und Ausrücken der Eingriffmittel (30) beizutragen,
und der Bedienungshebel (50) mit dem Riegel (42) verbunden ist, um ihn longitudinal längs dieser gegebenen Richtung (Δ) aus einer normalen Mittelposition zu verschieben, um ihn zwischen diese Seite (130) und diese Wand (230) einzuführen oder ihn daraus zu entnehmen.

2. Vorrichtung nach Anspruch 1, dadurch gekennzeichnet, daß die Eingriffmittel (30) an jeder dieser Seiten (130) einen vorspringenden Dorn (31) mit einer relativ zur Achse (100) geneigten und in Richtung zum Schaft (12) auseinanderlaufenden Rampe und mit einem Anschlag (312), der zu dieser Achse (100) im wesentlichen senkrecht ist, sowie an jeder dieser Wände (230) eine vorspringende Nase (32) mit einer relativ zur Achse (200) geneigten und zur Öffnung (22) auseinanderlaufenden Flanke (321) und mit einer zu dieser Achse (200) im wesentlichen senkrechten Grundfläche (322) enthalten.

3. Vorrichtung nach Anspruch 1 oder 2, dadurch gekennzeichnet, daß der Schließhaken (41) aus zwei Vertiefungen gebildet ist, die jeweils in einer der zwei gegenüberliegenden Seiten (130) des länglichen Ansatzes (13) ausgebildet sind, und daß der Riegel (42) eine zylindrische Rolle (421) ist, die von einem mit dem Bedienungshebel (50) verbundenen Stift (422) getragen wird.

4. Vorrichtung nach irgendeinem der Ansprüche 1 bis 3, dadurch gekennzeichnet, daß der Bedienungshebel (50) einen Griff (51) enthält, der am Körper (21) beweglich angebracht ist.

5. Vorrichtung nach Anspruch 4, dadurch gekennzeichnet, daß der Griff (51) Führungsstützen (423) trägt, die der Wirkung von Rückstellfedern (424) unterliegen und mit denen der die Rolle (421) tragende Stift (422) verbunden ist, und daß die Rolle (421) elastisch belastet ist.

6. Anwendung der Vorrichtung nach irgendeinem der Ansprüche 1 bis 5 auf ein terrestrisches Kraftfahrzeug, bei dem der Teil (P) des Sitzes ein beweglicher Teil einer Sitzfläche (A) ist.
